# EUROPEAN PATENT APPLICATION

(11) **EP 4 835 706 A1**
(43) Date of publication of application: **04.11.2026**
(21) Application number: 26161133.9
(22) Date of filing: 26.02.2026
(51) Int. Cl.: G06F 21/57, H04L 9/40

(54) **RISK ASSESSMENT AND SECURITY POSTURE VALIDATION BASED ON APPLICATION PROGRAMMING INTERFACE (API) AND NETWORKING CONFIGURATIONS**

(30) Priority: 28.04.2025 US 202519190900
(71) Applicant: Google LLC, Mountain View, CA 94043 (US)
(72) Inventor: Rajagopal, Achuth Narayan, Mountain View, California, 94043 (US); Mohan, Naveena, Mountain View, California, 94043 (US); Mansfield, Scott, Mountain, View California, 94043 (US); Bharambe, Ashlesha, Mountain View, California, 94043 (US); Gupta-Iwasaki, Meena, Mountain View, California, 94043 (US); Hershkovitz, Shelly, Mountain View, California, 94043 (US); Daniel, Nithin, Mountain View, California, 94043 (US); Zhou, Christine, Mountain View, California, 94043 (US); Pethaiyan, Vinoth Kumar, Mountain View, California, 94043 (US); Yang, Meng, Mountain View, California, 94043 (US)
(74) Representative: Betten & Resch

(57) **Abstract**

Aspects of the disclosure are directed to managing networking applications through centralized risk assessment. The centralized risk assessment discovers networking applications in a network connecting a user device to a server device providing a software application and fetches API configurations and/or networking configurations from the discovered networking applications. The centralized risk assessment assesses the API configurations and/or networking configurations individually and/or as a whole to identify any risks in the networking applications as well as provide security recommendations for reducing or eliminating any identified risks. This results in reduced processing costs and memory usage by managing the networking applications in a centralized manner, rather than having separate management configurations for each networking application.

## Description

### BACKGROUND

Developers increasingly use service oriented architectures to develop software applications. In service oriented architectures, networking applications run alongside the software applications to manage network topologies for implementing the software applications. These networking applications can perform networking functionalities while allowing the software applications to focus solely on their service. However, there can be a variety of different networking applications between a user device and a server device serving the software application, each performing one or more of the functionalities and being managed through their own configuration. This can increase security vulnerabilities if one or more of the configurations is mismanaged. Further, typically there is no centralized manner to enforce security policies and/or manage lifecycles across the variety of different network applications, resulting in an increase in processing costs and memory usage from separately controlling each networking application between the user device and server device.

### BRIEF SUMMARY

Aspects of the disclosure are directed to managing networking applications through centralized risk assessment. The centralized risk assessment discovers networking applications in a network connecting a user device to a server device providing a software application and fetches API configurations and/or networking configurations from the discovered networking applications. The centralized risk assessment assesses the API configurations and/or networking configurations individually and/or as a whole to identify any risks in the networking applications as well as provide security recommendations for reducing or eliminating any identified risks. This results in reduced processing costs and memory usage by managing the networking applications in a centralized manner, rather than having separate management configurations for each networking application.

An aspect of the disclosure provides for a method for identifying risks in a plurality of networking applications, the method including: discovering, by one or more processors, the plurality of networking applications; retrieving, by the one or more processors, at least one of application programming interface (API) or networking configurations from the discovered networking applications; assessing, by the one or more processors, the retrieved API or networking configurations for security risks to generate an assessment; converting, by the one or more processors, the assessment to an intermediate state; and identifying, by the one or more processors, one or more risks in the retrieved API or networking configurations based on the intermediate state.

Another aspect of the disclosure provides for a system including: one or more processors; and one or more storage devices coupled to the one or more processors and storing instructions that, when executed by the one or more processors, cause the one or more processors to perform operations for the method for identifying risks in a plurality of networking applications. Yet another aspect of the disclosure provides for a non-transitory computer readable medium for storing instructions that, when executed by one or more processors, cause the one or more processors to perform operations for the method for identifying risks in a plurality of networking applications.

In some examples, the method further includes: generating, by the one or more processors, a recommendation to reduce the identified risks in the retrieved API or networking configurations; and outputting, by the one or more processors, the recommendation.

In some examples, discovering the plurality of networking applications includes receiving respective registrations for each of the plurality of networking applications through an API. In some examples, discovering the plurality of networking applications includes automatically discovering the plurality of networking applications through an API of the software application that lists the networking applications in use.

In some examples, retrieving the API or networking configurations includes periodically pulling the API or networking configurations or subscribing to changes to the API or networking configurations through respective management APIs of the discovered networking applications. In some examples, retrieving the API or networking configurations includes exposing an API for the discovered networking applications to push their API or networking configurations periodically or when an update is occurring.

In some examples, assessing the retrieved API or networking configurations includes checking for a presence or absence of a configuration in a networking application. In some examples, assessing the retrieved API or networking configurations includes checking for an effect of an update across the plurality of networking applications. In some examples, assessing the retrieved API or networking configurations includes providing a domain specific language to the software application. In some examples, assessing the retrieved API or networking configurations includes generating a security profile including one or more domain specific language statements pertaining to various aspects of the API or networking configurations.

In some examples, a schema of the intermediate state is generic to the plurality of networking applications.

### BRIEF DESCRIPTION OF THE DRAWINGS

FIG. 1 depicts a block diagram of an example risk assessment server implemented for an API gateway according to aspects of the disclosure.
FIG. 2 depicts a block diagram of an example risk assessment server implemented for a service mesh according to aspects of the disclosure.
FIG. 3 depicts a block diagram of an example risk assessment system according to aspects of the disclosure.
FIG. 4 depicts a block diagram of an example environment for implementing a risk assessment system according to aspects of the disclosure.
FIG. 5 depicts a flow diagram of an example process for risk assessment according to aspects of the disclosure.

### DETAILED DESCRIPTION

The technology generally relates to a risk assessment server for managing networking applications present between a user device and a server device providing a software application to the user device. Example networking applications include application programming interface (API) gateways, level (L)3/L4/L7 proxies, and/or service meshes. These networking applications can perform networking functionalities, such as traffic management, e.g., load balancing and/or A/B testing and routing, security management, e.g., authentication and/or authorization, and/or performance management, e.g., caching and/or rate limiting. The risk assessment server allows for determining any risks associated with API configuration updates or updates to networking configurations for the networking applications. The risk assessment server further allows for providing security recommendations to mitigate or eliminate any vulnerabilities in the networking applications. This results in reduced processing costs and memory usage by managing the networking applications together through the risk assessment server, rather than having separate management configurations for each networking application.

The risk assessment server can be deployed in a managed environment for one or more software applications. The risk assessment server can be accessible through the internet or a peered network with the software applications. Alternatively, or additionally, the risk assessment server can be deployed in the same virtual cloud environment as one or more of the networking applications being monitored. Alternatively, or additionally, the risk assessment server can be deployed in a private and/or air-gapped environment where the risk assessment server is controlled or managed by a user with access to the private and/or air-gapped environment.

The risk assessment server discovers networking applications in the network connecting the user device to the server device providing the software application. The risk assessment server can receive registrations of the networking applications, including management endpoints, credentials, and/or network topologies, through an API of the risk assessment server. The risk assessment server can also automatically discover the networking applications through an API of the software application that lists the networking applications in use as well as network topologies of the networking applications in use.

The risk assessment server fetches APIs and/or networking configurations from the discovered networking applications. The risk assessment server can pull configurations from the discovered networking applications. For example, the risk assessment server can periodically pull configurations and/or subscribe to changes to the configurations through respective management APIs of the networking applications. As another example, the risk assessment server can directly access individual proxies or directly interface with a management server of the networking application. Alternatively, or additionally, the risk assessment server can expose an API for networking applications to push its configurations periodically and/or when an update occurs to the configuration.

The risk assessment server assesses the API configurations and/or networking configurations individually and/or as a whole. The risk assessment server can check for the presence or absence of a configuration in a networking application and/or check for the effects of an update across a network topology. For example, the risk assessment server can check for the presence or absence of encryption, e.g., transport layer security (TLS) or mutual TLS (mTLS), when traffic flows between layers of the network topology, e.g., between a load balancer, API gateway, and backend server. The risk assessment server can further check that the choice of encryption is sufficiently strong to make decryption of communication across the network topology difficult. A sufficiently strong encryption may refer to an encryption having a key length greater than a threshold length such that the encryption cannot be brute forced without the key. An example of strong encryption is the advanced encryption standard (AES).

The risk assessment server can also provide a domain specific language (DSL) for customized assessments of the networking applications. The DSL can be generic to apply the assessment to any of the networking applications between the user device and server device with minimal or no modifications.

The risk assessment server can implement the assessment as a security profile per networking application that fits the respective needs or requirements of each networking application between the user device and the server device. The security profile may refer to a collection of DSL statements, each pertaining to a particular aspect of the API and/or networking configurations. The security profile can differ depending on the environment. For example, the security profile used to monitor a private cloud without external traffic may be simpler than a security profile used to monitor a network exposed to the internet. Simpler security profiles may include more basic encryption protocols or authentication mechanisms, e.g., API keys, while more complex security profiles may include more complicated encryption protocols or authentication mechanisms, e.g., open authorization (OAUTH).

The risk assessment server identifies any risks and provides recommendations accordingly for the networking applications based on assessing the API configurations and/or networking configurations. The risk assessment server can convert an assessment of the API configurations and/or networking configurations to an intermediate state. The schema of the intermediate state can be generic to the networking applications between the user device and server device providing the software application, allowing the assessment to be shared across the networking applications. The intermediate state allows for converting verbose or networking application specific configurations into a more manageable state. For example, the TLS configuration can be verbose across different networking applications, so the intermediate state can instead store whether TLS is used, and the encryption protocols involved when TLS is used.

The intermediate state can be configured such that new configuration changes are applied on top of the existing intermediate state, to allow for new configurations to be assessed before the configuration is applied to the networking applications. The risk assessment server may compute the incremental changes to the intermediate state based on the new changes alone. The risk assessment server can apply the new changes alone to the intermediate state to check if the assessment improved or worsened.

The risk assessment server assesses the intermediate state to identify any security risks and/or vulnerabilities and provide recommendations to mitigate or eliminate the security risks and/or vulnerabilities. The risk assessment server can check if any policies are not being met in the intermediate state. If any policies are not being met, the risk assessment server can output a recommendation to remedy this policy failure.

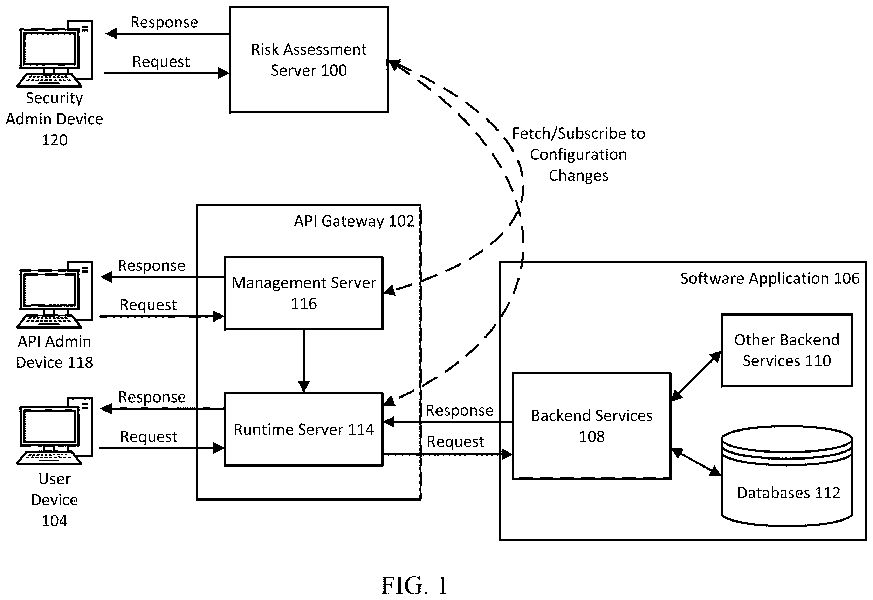

FIG. 1 depicts a block diagram of an example risk assessment server 100 implemented for an API gateway 102 between a user device 104 and a software application 106. While one API gateway 102, user device 104, and software application 106 are depicted in FIG. 1, it should be noted that the risk assessment server 100 can be implemented for any number of API gateways and/or other networking applications (not shown), any number of user devices, and/or any number of software applications.

The software application 106 can be part of a cloud computing system for cloud computing services such as infrastructure as a service, platform as a service, and/or software as a service. For example, the software application 106 can be an application for accounting, word processing, inventory tracking, fraud detection, file sharing, video sharing, audio sharing, map generation, search, communication, and/or gaming. The user device 104 can be any computing device, such as a desktop computer, laptop computer, tablet, and/or smartphone.

The software application 106 can include one or more backend services 108, one or more other backend services 110, and/or one or more databases 112 for running the application. The user device 104 can be configured to query the software application 106 by sending requests to the software application 106 and receiving responses from the software application 106 based on the requests. The software application 106 can process the request using the backend services 108 and/or other backend services 110 to generate the response. Processing the request may include the backend services 108 retrieving data from the databases 112 and/or communicating with the other backend services 110 in a serial manner, e.g., the other backend services 110 process one part of the request and the backend services 108 process the other part of the request.

The API gateway 102 can refer to an entry way for the user device 104 to communicate with the software application 106. The API gateway 102 can perform logical routing on the requests from the user device 104 as well as handle other tasks like authentication, authorization, and/or load balancing. The API gateway can include a runtime server 114 and management server 116. The runtime server 114 and management server 116 may be the same server or different servers. The runtime server 114 can control the requests and responses respectively being received from and being sent to the user device 104. The runtime server 114 can perform networking functionalities, such as traffic management, e.g., load balancing and/or A/B testing and routing, security management, e.g., authentication and/or authorization, and/or performance management, e.g., caching and/or rate limiting, as examples. The management server 116 can manage the runtime server 114, including determining which networking functionalities the runtime server 114 can perform and how the runtime server 114 can perform those networking functionalities. The management server 116 can receive requests from an API administrator device 118 for managing the runtime server 114 as well as generate responses to send to the API administrator device 118 indicating how the runtime server 114 is being managed. The API administrator device 118 can be any computing device, such as a desktop computer, laptop computer, tablet, and/or smartphone.

The risk assessment server 100 can be deployed with the API gateway 102 to access the runtime server 114 and/or the management server 116. The risk assessment server 100 can be configured to fetch and/or subscribe to configuration changes of the API gateway 102 based on accessing the runtime server 114 and/or the management server 116. The risk assessment server 100 can receive requests from a security administrator device 120 for assessing any risks associated with the API gateway 102 as well as generate responses to send to the security administrator device 120 indicating whether there are any risks and/or providing recommendations to mitigate such risks. The security administrator device 120 can be any computing device, such as a desktop computer, laptop computer, tablet, and/or smartphone.

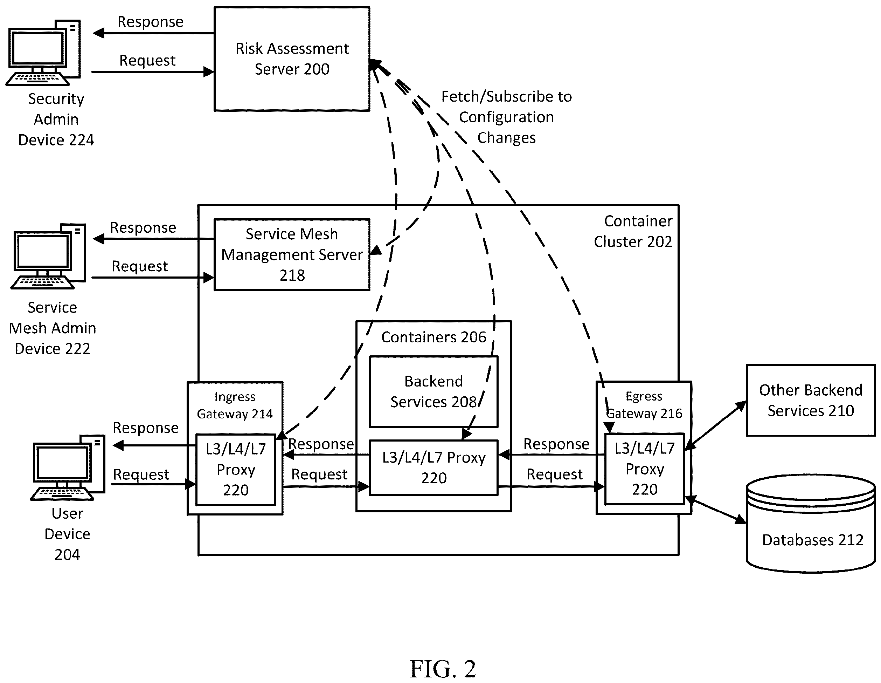

FIG. 2 depicts a block diagram of an example risk assessment server 200 implemented for a service mesh. The risk assessment server 200 can correspond to the risk assessment server 100 as depicted in FIG. 1. The service mesh can include a container cluster 202 in communication with a user device 204. The user device 204 can correspond to the user device 104 as depicted in FIG. 1. The container cluster 202 can include a plurality of containers 206 having backend services 208 that are in communication with other backend services 210 and databases 212. The backend services 208, other backend services 210, and databases 212 can form a software application. For example, the software application of FIG. 2 formed by the backend services 208, other backend services 210, and databases 212 can correspond to the software application 106 as depicted in FIG. 1. While one container cluster 202 and user device 204 are depicted in FIG. 2, it should be noted that the risk assessment server 200 can be implemented for any number of container clusters and/or other networking applications (not shown), any number of user devices, and/or any number of software applications. Further, while the API gateway 102 of FIG. 1 is shown as a separate figure from the service mesh of FIG. 2, alternatively or additionally, a risk assessment server may be implemented for a combination of one or more API gateways, service meshes, and/or other networking applications.

The service mesh can refer to a logical networking infrastructure layer that is responsible for managing communication, such as between services within the container cluster 202, between services in the container cluster 202 and the user device 204, and/or between services in the container cluster 202 and services outside the cluster 202, e.g., other backend services 210 and databases 212. The service mesh can be implemented in cloud native architectures, such as microservice architectures. The service mesh can perform logical routing on the requests from the user device 204 as well as handle other tasks like authentication, authorization, and/or load balancing. The container cluster 202 can include an ingress gateway 214 serving as a communication point between the user device 204 and the container cluster 202, an egress gateway 216 serving as a communication point between services in the container cluster 202 and services outside the container cluster 202, e.g., the other backend services 210 and/or databases 212, and a service mesh management server 218 for managing the container cluster 202. Outside the container cluster 202 may also refer to a public network, such as the internet. The ingress gateway 214, egress gateway 216, and/or containers 206 can each include one or more L3, L4, and/or L7 proxies. The proxies 220 can perform networking functionalities, such as traffic management, e.g., load balancing and/or A/B testing and routing, security management, e.g., authentication and/or authorization, and/or performance management, e.g., caching and/or rate limiting, as examples. The service mesh management server 218 can manage the proxies 220, including determining which networking functionalities the proxies 220 can perform and how the proxies 220 can perform those networking functionalities. The service mesh management server 218 can receive requests from a service mesh administrator device 222 for managing the proxies 220 as well as generate responses to send to the service mesh administrator device 222 indicating how the proxies 220 are being managed. The service mesh administrator device 222 can be any computing device, such as a desktop computer, laptop computer, tablet, and/or smartphone. The service mesh administrator device 222 can also correspond to the API administrator device 118 as depicted in FIG. 1, e.g., be an administrator device for both an API gateway and service mesh.

The risk assessment server 200 can be deployed with the container cluster 202 to access the proxies 220 and/or the service mesh management server 218. The risk assessment server 200 can be configured to fetch and/or subscribe to configuration changes of the service mesh based on accessing the proxies 220 and/or the service mesh management server 218. The risk assessment server 200 can receive requests from a security administrator device 224 for assessing any risks associated with the service mesh as well as generate responses to send to the security administrator device 224 indicating whether there are any risks and/or providing recommendations to mitigate such risks. The security administrator device 224 can be any computing device, such as a desktop computer, laptop computer, tablet, and/or smartphone. The security administrator device 224 can also correspond to the security administrator device 120 as depicted in FIG. 1.

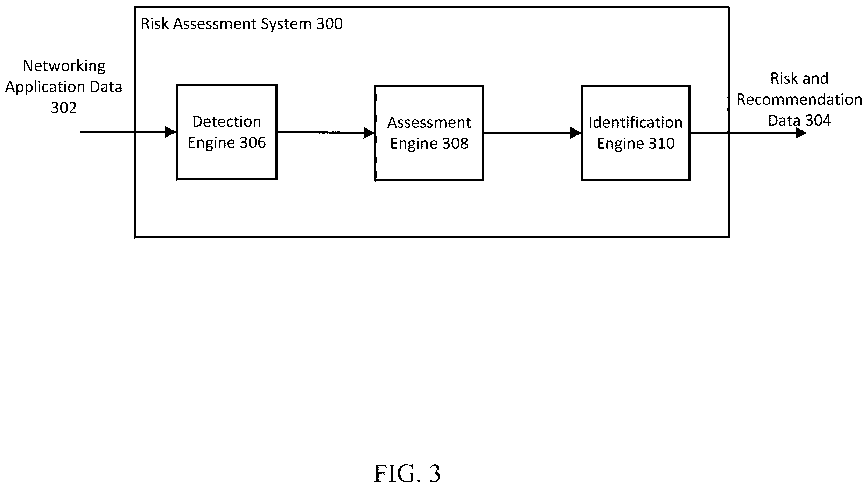

FIG. 3 depicts a block diagram of an example risk assessment system 300. The risk assessment system 300 can be implemented on one or more computing devices in one or more locations. The risk assessment system 300 can correspond to the risk assessment server 100 as depicted in FIG. 1 and/or the risk assessment server 200 as depicted in FIG. 2.

The risk assessment system 300 can be configured to receive input data, including networking application data 302. The networking application data can include data pertaining to which networking applications are between the user device and software application. The data pertaining to these networking applications can include networking application registrations, including management endpoints, credentials, and/or network topologies, as well as a list of networking applications in use, including network topologies of those networking applications. The networking application data 302 can further include API and/or networking configuration data, including the presence or absence of particular configurations and/or updates to the API and/or networking configurations.

For example, the risk assessment system 300 can receive the networking application data 302 as part of a call to an application programming interface (API) exposing the risk assessment system 300 to one or more computing devices. The risk assessment system 300 can also receive the networking application data 302 through a storage medium, such as remote storage connected to one or more computing devices over a network. The risk assessment system 300 can further receive the networking application data 302 through a user interface on a client computing device coupled to the risk assessment system 300.

Based on the networking application data 302, the risk assessment system 300 can generate output data, including risk and/or recommendation data 304. The risk and/or recommendation data 304 can include any risks associated with the API and/or networking configurations and/or updates to the API and/or networking configurations for the networking applications between the user device and software application. The risk and/or recommendation data 304 can further include recommendations for the networking applications to reduce or eliminate the risks.

For example, the risk assessment system 300 can be configured to send the risk and/or recommendation data 304 for display on a client or user display. The risk assessment system 300 can also be configured to provide the risk and/or recommendation data 304 as a set of computer-readable instructions, such as one or more computer programs for reducing risk in networking applications. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model. The risk assessment system 300 can further be configured to forward the risk and/or recommendation data 304 to one or more other devices configured for translating the risk and/or recommendation data 304 for display or into an executable program written in a computer programming language for reducing risk in networking applications. The risk assessment system 300 can also be configured to send the risk and/or recommendation data 304 to a storage device for storage and later retrieval.

The risk assessment engine 300 can include a detection engine 306, an assessment engine 308, and an identification engine 310. The detection engine 306, assessment engine 308, and identification engine 310 can be implemented as one or more computer programs, specially configured electronic circuitry, or any combination thereof.

The detection engine 306 can be configured to discover networking applications in the network from the networking application data 302. The detection engine 306 can receive registrations of the networking applications from the networking applications themselves and/or automatically discover a list of networking applications in use through the software application. For example, the detection engine 306 can discover an API gateway and/or a service mesh between the user device and the software application.

The detection engine 306 can be further configured to fetch API and/or networking configurations from the discovered networking applications. The detection engine 306 can periodically pull the API and/or networking configurations from the networking applications and/or subscribe to have changes to the API and/or networking configurations pushed thereto. For example, the detection engine 306 can interface with individual proxies and/or management servers of a service mesh and/or API gateway to pull and/or have pushed the API and/or networking configurations of the service mesh and/or API gateway.

The assessment engine 308 can be configured to assess the API and/or networking configurations from the discovered networking applications. The assessment engine 308 can assess the API and/or networking configurations individually and/or as a whole. The assessment engine 308 can check for the presence or absence of particular configurations in the discovered networking applications. The assessment engine 308 can further check for any effects of updates to the API and/or networking configurations from the discovered networking applications.

For example, the assessment engine 308 can check for the presence or absence of encryption and/or security standards for requests and responses flowing from the user device to the software application through the networking applications. Example encryption and/or security standards can include transport layer security and/or mutual transport layer security. The assessment engine 308 can check for the presence or absence of encryption and/or security standards in an API gateway and/or service mesh. As another example, the assessment engine 308 can check that the choice of encryption is strong enough where decryption cannot be brute forced. An example of a strong encryption choice is the advanced encryption standard. Strong encryption refers to encryption having a key length greater than a threshold length and/or other mechanisms in the encryption so the encryption cannot be determined without the key via trial and error.

The assessment engine 308 can be further configured to assess the API and/or networking configurations in a domain specific language (DSL). The DSL can be generic for applying the assessment to any of the discovered networking applications, e.g., API gateway and/or service mesh, with little to no modifications to the DSL. The assessment engine 308 can implement the assessment of the API and/or networking configurations as a security profile for each of the discovered networking applications. The security profile may refer to a set of DSL statements, each pertaining to a particular aspect of the API and/or networking configurations.

The identification engine 310 can be configured to identify any risks from the assessment of the API and/or networking configurations. The identification engine 310 can convert the assessments to an intermediate state, where the schema of the intermediate state is generic to the discovered networking applications, thus allowing the assessment to be shared across the networking applications. The intermediate state allows for converting verbose or networking application-specific configurations into a more manageable state, thus reducing processing costs and memory usage in identifying risks in the discovered networking applications. For example, transport layer security can be a verbose configuration across different networking applications, so the intermediate state can instead store whether the transport layer security is used and the choice of encryption for when transport layer security is used. The identification engine 310 can implement new configuration changes on top of the existing intermediate state, to allow for new configurations to be assessed before being applied to the networking applications. The identification engine 310 can compute incremental changes to the intermediate state based on any new changes and apply the new changes to the intermediate state to determine if the assessment of the API and/or networking configurations improved or worsened. The identification engine 310 can parse the intermediate state to identify any risks in the networking applications, such as security vulnerabilities.

The identification engine 310 can be further configured to provide recommendations based on any identified risks from the assessment of the API and/or networking configurations. The recommendations can be implemented to mitigate or eliminate the identified risks. For example, the identification engine 310 can check if any security policies and/or standards for the networking applications are not being met via parsing the intermediate state. If any of the security policies and/or standards are not being met, the identification engine 310 can output a recommendation to remedy the security policy and/or standard failure. The identification engine 310 can also output a notification indicating that the security policies and/or standards are not being met based on the identified risks.

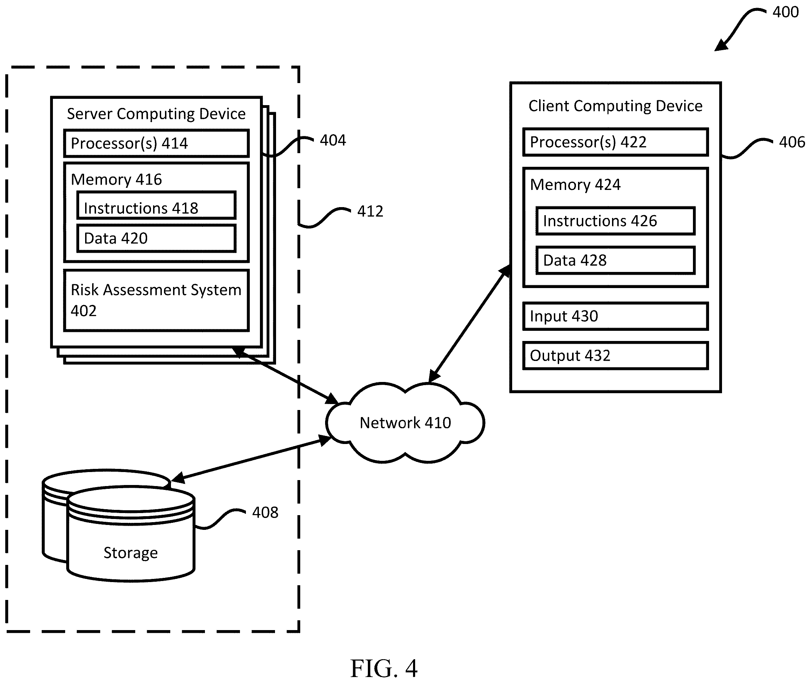

FIG. 4 depicts a block diagram of an example computing environment 400 for implementing a risk assessment system 402. The risk assessment system 402 can correspond to the risk assessment system 300 as depicted in FIG. 3. The risk assessment system 402 can be implemented on one or more devices having one or more processors in one or more locations, such as in a server computing device 404. A client computing device 406 and the server computing device 404 can be communicatively coupled to one or more storage devices 408 over a network 410. The server computing device 404 and the storage devices 408 can form part of a cloud computing system 412 for cloud computing services such as Infrastructure as a Service (IaaS), Platform as a Service (PaaS), and/or Software as a Service (SaaS).

For example, the client computing device 406 may use the cloud computing system 412 as a service that provides software applications, such as accounting, word processing, inventory tracking, fraud detection, file sharing, video sharing, audio sharing, communication, or gaming. As another example, the client computing device 406 can access the cloud computing system 412 as part of one or more operations that employ machine learning, deep learning, and/or artificial intelligence technology to train the software applications. The cloud computing system 412 can provide model parameters that can be used to update machine learning models for the software applications.

The storage devices 408 can be a combination of volatile and non-volatile memory and can be at the same or different physical locations than the computing devices 404, 406. For example, the storage devices 408 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 404 can include one or more processors 414 and memory 416. The memory 416 can store information accessible by the processors 414, including instructions 418 that can be executed by the processors 414. The memory 416 can also include data 420 that can be retrieved, manipulated, or stored by the processors 414. The memory 416 can be a type of transitory or non-transitory computer readable medium capable of storing information accessible by the processors 414, such as volatile and non-volatile memory. The processors 414 can include one or more central processing units (CPUs), graphic processing units (GPUs), field-programmable gate arrays (FPGAs), and/or application-specific integrated circuits (ASICs), such as tensor processing units (TPUs).

The instructions 418 can include one or more instructions that when executed by the processors 414, cause the one or more processors to perform actions defined by the instructions 418. The instructions 418 can be stored in object code format for direct processing by the processors 414, or in other formats including interpretable scripts or collections of independent source code modules that are interpreted on demand or compiled in advance. The instructions 418 can include instructions for implementing the risk assessment system 402. The risk assessment system 402 can be executed using the processors 414, and/or using other processors remotely located from the server computing device 404.

The data 420 can be retrieved, stored, or modified by the processors 414 in accordance with the instructions 418. The data 420 can be stored in computer registers, in a relational or non-relational database as a table having a plurality of different fields and records, or as JSON, YAML, proto, or XML documents. The data 420 can also be formatted in a computer-readable format such as, but not limited to, binary values, ASCII, or Unicode. Moreover, the data 420 can include information sufficient to identify relevant information, such as numbers, descriptive text, proprietary codes, pointers, references to data stored in other memories, including other network locations, or information that is used by a function to calculate relevant data.

The client computing device 406 can also be configured similarly to the server computing device 404, with one or more processors 422, memory 424, instructions 426, and data 428. The client computing device 406 can also include a client input 430 and a client output 432. The client input 430 can include any appropriate mechanism or technique for receiving input from a client, such as keyboard, mouse, mechanical actuators, soft actuators, touchscreens, microphones, and sensors.

The server computing device 404 can be configured to transmit data to the client computing device 406, and the client computing device 406 can be configured to display at least a portion of the received data on a display implemented as part of the client output 432. The client output 432 can also be used for displaying an interface between the client computing device 406 and the server computing device 404. The client output 432 can alternatively or additionally include one or more speakers, transducers or other audio outputs, a haptic interface or other tactile feedback that provides non-visual and non-audible information to a client of the client computing device 406.

Although FIG. 4 illustrates the processors 414, 422 and the memories 416, 424 as being within the computing devices 404, 406, components described herein, including the processors 414, 422 and the memories 416, 424 can include multiple processors and memories that can operate in different physical locations and not within the same computing device. For example, some of the instructions 418, 426 and the data 420, 428 can be stored on a removable SD card and other instructions within a read-only computer chip. Some or all of the instructions 418, 426 and data 420, 428 can be stored in a location physically remote from, yet still accessible by, the processors 414, 422. Similarly, the processors 414, 422 can include a collection of processors that can perform concurrent and/or sequential operations. The computing devices 404, 406 can each include one or more internal clocks providing timing information, which can be used for time measurement for operations and programs run by the computing devices 404, 406.

The computing devices 404, 406 can be capable of direct and indirect communication over the network 410. The devices 404, 406 can set up listening sockets that may accept an initiating connection for sending and receiving information. The network 410 itself can include various configurations and protocols including the Internet, World Wide Web, intranets, virtual private networks, wide area networks, local networks, and private networks using communication protocols proprietary to one or more companies. The network 410 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 410, in addition or alternatively, can also support wired connections between the computing devices 404, 406, including over various types of Ethernet connection.

Although a single server computing device 404 and user computing device 406 are shown in FIG. 4, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

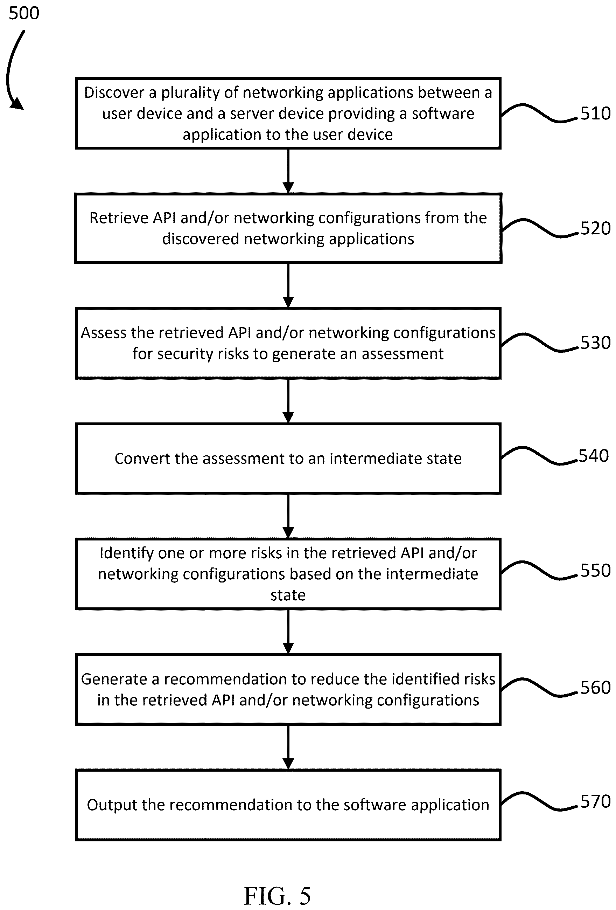

FIG. 5 depicts an example process 500 for identifying risks in a plurality of networking applications between a user device and a server device providing a software application to the user device. The example process 500 can be performed on a system of one or more processors in one or more locations, such as the risk assessment system 300 as depicted in FIG. 3.

As shown in block 510, the risk assessment system 300 discovers the plurality of networking applications between the user device and the server device. The risk assessment system 300 can receive respective registrations for each of the plurality of networking applications through an API. The risk assessment system 300 can further automatically discover the plurality of networking applications through an API of the software application that lists the networking applications in use. The plurality of networking applications can include API gateways and/or service meshes, as examples.

As shown in block 520, the risk assessment system 300 retrieves application programming interface (API) and/or networking configurations from the discovered networking applications. The risk assessment system 300 can periodically pull the API and/or networking configurations. The risk assessment system 300 can further subscribe to changes to the API and/or networking configurations through respective management APIs of the discovered networking applications. The risk assessment system 300 can also expose an API for the discovered networking applications to push their API and/or networking configurations periodically and/or when an update occurs.

As shown in block 530, the risk assessment system 300 assesses the retrieved API or networking configurations for security risks to generate an assessment. The risk assessment system 300 can check for the presence or absence of a particular configuration in one or more of the discovered networking applications. The risk assessment system 300 can further check for the effects of an update to the API and/or networking configurations across the plurality of networking applications. The risk assessment system 300 can provide the assessment as a DSL to the software application. The DSL can be generic for applying the assessment to the plurality of networking applications. The risk assessment system 300 can also generate a security profile, including one or more DSLs pertaining to various aspects of the API and/or networking configurations.

As shown in block 540, the risk assessment system 300 converts the assessment to an intermediate state. The schema of the intermediate state can be generic to the plurality of networking applications. The intermediate state allows for the assessment to be shared across the networking applications, where the risk assessment system 300 can convert verbose or networking application-specific configurations into a more manageable state, thus reducing processing costs and memory usage in identifying risks in the discovered networking applications. The risk assessment system 300 can implement new configuration changes on top of the existing intermediate state, allowing for the new configurations to be assessed before being applied to the plurality of networking applications.

As shown in block 550, the risk assessment system 300 identifies one or more risks in the retrieved API or networking configurations based on the intermediate state. The risk assessment system 300 can determine if any security policies and/or standards for the plurality of networking applications are not being met by parsing the intermediate state.

As shown in block 560, the risk assessment system 300 generates a recommendation to reduce the identified risks in the retrieved API or networking configurations. The risk assessment system 300 can provide a recommendation to remedy any failures in the security policies and/or standards, such as recommending stronger encryption or to implement encryption in areas where there is no encryption.

As shown in block 570, the risk assessment system 300 outputs the recommendation. The risk assessment system 300 can output the recommendation to a client device and/or to the software application.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for identifying risks in a plurality of networking applications, the method comprising:
discovering, by one or more processors, the plurality of networking applications;
retrieving, by the one or more processors, at least one of application programming interface, API, or networking configurations from the discovered networking applications;
assessing, by the one or more processors, the retrieved API or networking configurations for security risks to generate an assessment;
converting, by the one or more processors, the assessment to an intermediate state; and
identifying, by the one or more processors, one or more risks in the retrieved API or networking configurations based on the intermediate state.

2. The method of claim 1, further comprising:
generating, by the one or more processors, a recommendation to reduce the identified risks in the retrieved API or networking configurations; and
outputting, by the one or more processors, the recommendation.

3. The method of claim 1 or 2, wherein discovering the plurality of networking applications comprises at least one of:
receiving respective registrations for each of the plurality of networking applications through an API; or
automatically discovering the plurality of networking applications through an API of the software application that lists the networking applications in use.

4. The method of one of claims 1 to 3, wherein retrieving the API or networking configurations comprises at least one of:
periodically pulling the API or networking configurations or subscribing to changes to the API or networking configurations through respective management APIs of the discovered networking applications; or
exposing an API for the discovered networking applications to push their API or
networking configurations periodically or when an update is occurring.

5. The method of one of claims 1 to 4, wherein assessing the retrieved API or networking configurations comprises at least one of:
checking for a presence or absence of a configuration in a networking application; or
checking for an effect of an update across the plurality of networking applications.

6. The method of one of claims 1 to 5, wherein assessing the retrieved API or networking configurations comprises:
providing a domain specific language to the software application; or
generating a security profile comprising one or more domain specific language statements pertaining to various aspects of the API or networking configurations.

7. The method of one of claims 1 to 6, wherein a schema of the intermediate state is generic to the plurality of networking applications.

8. A system comprising:
one or more processors; and
one or more storage devices coupled to the one or more processors and storing instructions that, when executed by the one or more processors, cause the one or more processors to perform operations for identifying risks in a plurality of networking applications, the operations comprising:
discovering the plurality of networking applications;
retrieving at least one of application programming interface, API, or networking configurations from the discovered networking applications;
assessing the retrieved API or networking configurations for security risks to generate an assessment;
converting the assessment to an intermediate state; and
identifying one or more risks in the retrieved API or networking configurations based on the intermediate state.

9. The system of claim 8, wherein the operations further comprise:
generating a recommendation to reduce the identified risks in the retrieved API or networking configurations; and
outputting the recommendation.

10. The system of claim 8 or 9, wherein discovering the plurality of networking applications comprises at least one of:
receiving respective registrations for each of the plurality of networking applications through an API; or
automatically discovering the plurality of networking applications through an API of the software application that lists the networking applications in use.

11. The system of one of claims 8 to 10, wherein retrieving the API or networking configurations comprises at least one of:
periodically pulling the API or networking configurations or subscribing to changes to the API or networking configurations through respective management APIs of the discovered networking applications; or
exposing an API for the discovered networking applications to push their API or networking configurations periodically or when an update is occurring.

12. The system of one of claims 8 to 11, wherein assessing the retrieved API or networking configurations comprises at least one of:
checking for a presence or absence of a configuration in a networking application; or
checking for an effect of an update across the plurality of networking applications.

13. The system of one of claims 8 to 12, wherein assessing the retrieved API or networking configurations comprises
providing a domain specific language to the software application; or
generating a security profile comprising one or more domain specific language statements pertaining to various aspects of the API or networking configurations.

14. The system of one of claims 8 to 13, wherein a schema of the intermediate state is generic to the plurality of networking applications.

15. A non-transitory computer readable medium for storing instructions that, when executed by one or more processors, cause the one or more processors to perform operations for identifying risks in a plurality of networking applications, the operations comprising:
discovering the plurality of networking applications;
retrieving at least one of application programming interface, API, or networking configurations from the discovered networking applications;
assessing the retrieved API or networking configurations for security risks to generate an assessment;
converting the assessment to an intermediate state; and
identifying one or more risks in the retrieved API or networking configurations based on the intermediate state.

16. A computer program comprising instructions which, when the program is executed by one or more processors of a computer, cause the computer to carry out the method of one of claims 1 to 7.
